# EUROPEAN PATENT SPECIFICATION

(11) **EP 0 540 502 B1**
(45) Date of publication and mention of the grant of the patent: **13.05.1998**
(21) Application number: 93100635.7
(22) Date of filing: 06.09.1988
(51) Int. Cl.: C08K 3/22, C08L 69/00

(54) **Polymer mixture comprising an aromatic polycarbonate and titaniumdioxyde; objects formed from the polymer mixture**
Polymermischung die aromatisches Polycarbonat und Titandioxid enthält; geformte Gegenstände daraus
Mélange de polymère comprenant un polycarbonate aromatique et du dioxyde de titane; articles formés à partir dudit mélange

(30) Priority: 04.11.1987 NL 8702632
(43) Date of publication of application: 05.05.1993
(62) Divisional of application: 88201914.4
(73) Proprietor: GENERAL ELECTRIC COMPANY, Schenectady, NY 12345 (US)
(72) Inventor: De Boer, Jan, General Electric Plastics B.V., NL-4600 AC Bergen op Zoom (NL); Van de Watering, L.P.J., General Elec. Plastics BV, NL-4600 AC Bergen op Zoom (NL)
(74) Representative: Grever, Frederik

(56) References cited:
- WO-A-80/00708
- JP-A-57 133 149
- PATENT ABSTRACTS OF JAPAN vol. 6, no. 231 (C-135)(1109) 17 November 1982

## Description

The invention relates to a polymer mixture comprising an aromatic polycarbonate with terminal 4-cumylphenylgroups and a relative viscosity of less than 1.24 but above 1, as measured according to DIN 7744, vol. 2, in a concentration of 0.5 g of polymer dissolved in 100 ml of dichloro-ethane at 25°C, and titaniumdioxide in a quantity of 0.1 to 10% by weight with respect to the sum of the polycarbonate and the titaniumdioxide.

The invention also relates to objects formed from the above mentioned mixtures.

Polymer mixtures comprising a high molecular weight polycarbonate and up to 5% by weight of titaniumdioxyde are known from WO 80/00708.

In general, the impact strength of a polycarbonate decreases considerably when the polycarbonate is mixed with titaniumdioxyde. It has been found that polymer mixtures comprising a special type of aromatic polycarbonates as defined above suffer far less from said decrease in impact strength.

Phenol is the most generally used chain stopper. The use of 4-cumylphenol as a chain stopper is known from JP-A-57(1982)-133149. The use of chain stoppers leads to the incorporation in the polymer of terminal groups derived from the chain stopper (namely 4-cumylphenyl groups).

The polycarbonate powder according to JP-A-57(1982)-133419 has a molecular weight of 24,700 to 25,600, which corresponds to a relative viscosity of approximately 1.25-1.28.

The polymer mixture according to the invention may moreover comprise further polymers, for example, polyalkylene terephthalates, for example, polybutylene terephthalate. It is to be preferred, when polyalkylene terephthalates are used, to use 1-100 parts by weight of the polyalkylene terephthalate per 100 parts by weight of the aromatic polycarbonate according to the invention plus the agent or the agents to improve the impact strength.

### The aromatic polycarbonate as used in the polymer mixture according to the invention

Aromatic polycarbonates are polymers known per se. They are conventionally prepared according to a so-called interfacial polymerisation process. In this process, phosgene is passed through an aqueous alkaline solution of a dihydric phenol in the presence of an inert organic solvent. A chain stopper is usually added during or shortly before the end of the reaction. 4-Cumylphenol is always used as a chain stopper in the preparation of the aromatic polycarbonate according to the invention. It is possible to control the molecular weight of the polycarbonate by dosing the quantity of chain stopper and by the choice of the instant at wich the chain stopper is added to the reaction mixture. For the preparation of the polymer according to the invention, all this is controlled so that a polycarbonate having a relative viscosity of less than 1.24 is obtained. Relative viscosity is always to be understood to mean herein the relative viscosity determined according to DIN-standard 7744, vol. 2, in a concentration of 0.5 g of polymer dissolved in 100 ml of dichloroethane at 25° C. The measurements were always carried out using a Ubelohde viscosimeter with a so-called Oc capillary.

It is also possible to obtain a polycarbonate according to the invention by mixing two or more different polycarbonates. For example, by mixing, in approximately equal quantities by weight, a polycarbonate having a relative viscosity of 1.24 with a polycarbonate having a relative viscosity of 1.20. Both polycarbonates must have terminal 4-cumylphenyl groups.

The invention will now be described in greater detail with reference to the ensuing specific examples.

### Example I

### The preparation of an aromatic polycarbonate

Various aromatic polycarbonates were prepared by means of interfacial polymerisation starting from bisphenol A and phosgene. A chain stopper was always used in the preparation: 4-cumylphenol was used in the preparation of polymer A, and phenol was used in the preparation of polymer B. The chain stopper was used in a concentration of 4.7 mol% for polymer A, and 4.6 mol% for polymer B.

In this manner two polymers were obtained having a relative viscosity as indicated in Table A.

The notch impact value according to Izod was measured at different temperatures. The results are also recorded in Table A.

The melt flow index (MFI) was also determined according to DIN 53735 or ISO 1133 at 300° C under a load of 12 N for 10 minutes.

**Table A**

| Polymer | A | B |
|---|---|---|
| Terminal group | 4-cumylphenyl | phenyl |
| . relative viscosity | 1.23 | 1.25 |
| . MFI (g/10 min) 55 | 25 | 20 |
| . Izod notch impact value (J/m) | | |
| | | |
| Room temp. | 620 | 620 |
| 0° C | 510 | 120 |
| -10° C | 250 | 100 |
| -20° C | 170 | 170 |

### Example II

Polymer A was compounded in an extruder with various quantities of barium sulphate. The same was done with polymer B. In this manner various compositions were obtained. Test rods for measuring the Izod notch impact value were injection-moulded from these compositions. The notch impact values of these rods were determined. The various compositions and the associated notch impact values are recorded in Table B.

**Table B**

| | IZOD Notch impact value (J/m; room temperature) |
|---|---|
| Polymer A | |
| + 0% by weight of BaSO₄ | 656 |
| + 1% by weight of BaSO₄ | 170 |
| + 3% by weight of BaSO₄ | 158 |
| | |

| Polymer B | |
|---|---|
| + 0% by weight of BaSO₄ | 625 |
| + 1% by weight of BaSO₄ | 245 |
| + 3% by weight of BaSO₄ | 135 |

It may be seen from Table B that the polymer according to the invention (polymer A), as well as the known polymer (polymer B), after mixing with barium sulphate have a bad notch impact value.

The polymers A and B mentioned hereinbefore were then compounded with various quantities of titanium dioxide. The notch impact value was determined again. The results are recorded in Table C.

**Table C**

| | IZOD Notch impact value (J/m; room temperature) |
|---|---|
| Polymer A | |
| + 0% by weight of TiO₂ | 656 |
| + 1% by weight of TiO₂ | 643 |
| + 2% by weight of TiO₂ | 634 |
| + 5% by weight of TiO₂ | 636 |
| | |

| Polymer B | |
|---|---|
| + 0% by weight of TiO₂ | 625 |
| + 1% by weight of TiO₂ | 541 |
| + 2% by weight of TiO₂ | 164 |

It may be seen from Table C that the polymer according to the invention (polymer A) is sensitive to mixing with titanium dioxide only to a very slight extent. The known polymer B on the contrary shows a very strong sensitivity to titanium dioxide.

## Claims

1. A polymer mixture comprising an aromatic polycarbonate with terminal 4-cumylphenylgroups and a relative viscosity of less than 1.24 but above 1, as measured according to DIN 7744, vol. 2, in a concentration of 0.5 g of polymer dissolved in 100 ml of dichloro-ethane at 25°C, and titaniumdioxide in a quantity of 0.1 to 10% by weight with respect to the sum of the polycarbonate and the titaniumdioxide.

2. Articles formed from the polymer mixture as claimed in claim 1.

## Patentansprüche

1. Polymermischung, die ein aromatisches Polycarbonat enthält, das 4-Cumylphenylendgruppen und eine relative Viskosität von weniger als 1,24 aber über 1 besitzt, gemessen entsprechend DIN 7744, Band 2, in einer Konzentration von 0,5 g Polymer gelöst in 100 ml Dichlorethan bei 25°C, und Titandioxid in einer Menge von 0,1 bis 10 Gew.-% bezogen auf die Summe aus dem Polycarbonat und dem Titandioxid.

2. Aus der Polymermischung gemäß Anspruch 1 geformte Gegenstände.

## Revendications

1. Mélange de polymère comprenant un polycarbonate aromatique qui comporte des groupes 4-cumylphényle terminaux et présente une viscosité relative inférieure à 1,24 mais supérieure à 1, telle que mesurée selon la norme DIN 7744, vol. 2, en une concentration de 0,5 g de polymère dissous dans 100 ml de dichloroéthane à 25° C, et du dioxyde de titane en une quantité de 0,1 à 10 % en poids par rapport à la somme du polycarbonate et du dioxyde de titane.

2. Articles formés à partir du mélange de polymère selon la revendication 1.
